# FASCICULE DE BREVET EUROPEEN

(11) **EP 1 547 918 B1**
(45) Date de publication et mention de la délivrance du brevet: **07.03.2007**
(21) Numéro de dépôt: 04292931.5
(22) Date de dépôt: 09.12.2004
(51) Int. Cl.: B64C 25/42

(54) **Architecture de système de freinage comportant deux calculateurs et résistant à une panne double, et procédé de gestion associe**
Doppelt redundante Bremssystemarchitektur mit zwei Rechnern und zugehöriges Verfahren
Architecture of a brake system comprising two computers resistant to double failure, and associated method

(30) Priorité: 22.12.2003 FR 0315134
(43) Date de publication de la demande: 29.06.2005
(73) Titulaire: MESSIER-BUGATTI, 78140 Velizy Villacoublay (FR)
(72) Inventeur: Mallevais, Stéphane, 91300 Massy-Verrieres (FR); Garcia, Jean-Pierre, 31770 Colomiers (FR)
(74) Mandataire: Parzy, Benjamin Alain

(56) Documents cités:
- US-B1- 6 513 885

## Description

L'invention concerne une architecture de système de freinage pour aéronef comportant deux calculateurs et résistant à une panne double, ainsi qu'un procédé de gestion d'une telle architecture.

### ARRIERE-PLAN DE L'INVENTION

On connaît des architectures de système de freinage pour aéronefs équipés d'une pluralité de freins, l'architecture comportant au moins deux calculateurs de freinage contrôlant chacun la totalité des freins.

Chaque calculateur est divisé en deux canaux, un premier canal étant adapté à contrôler les freins tandis qu'un second canal est adapté à surveiller le premier canal. Si, dans le calculateur actif, une divergence entre les canaux apparaît, l'autre calculateur prend automatiquement le relais, ce qui rend une telle architecture résistant à une panne simple.

Cependant, si une nouvelle panne venait à survenir sur le deuxième calculateur, le freinage avec la totalité des freins ne pourrait plus être garanti au moyen des deux seuls calculateurs.

Il faudrait alors soit renoncer à assurer le freinage ou se contenter d'un freinage dégradé, soit prévoir un troisième calculateur.

On connaît du document US 6,513,885 une architecture de freinage comportant trois canaux primaires contrôlant chacun une partie des freins, et trois canaux secondaire contrôlant chacun une partie des freins, de sorte que chacune des parties des freins puisse être contrôlée par un canal primaire, et, en cas de perte de celui-ci, par le canal secondaire correspondant.

### OBJET DE L'INVENTION

L'invention vise à proposer une architecture de système de freinage offrant un niveau de sûreté amélioré, sans toutefois recourir à un calculateur supplémentaire.

### BREVE DESCRIPTION DE L'INVENTION

Selon l'invention, on propose une architecture de système de freinage pour aéronef équipé d'une pluralité d'atterrisseurs portant une pluralité de roues dont certaines au moins sont équipées de freins, l'architecture comportant au moins deux calculateurs de freinage qui comprennent chacun deux modules de sorte que, dans chaque calculateur, l'un des modules contrôle une première partie des freins et l'autre des modules contrôle une seconde partie des freins complémentaire à la première, caractérisée en ce que l'architecture est configurée pour fonctionner dans l'un des modes de fonctionnement suivants :
- un premier mode normal dans lequel les deux modules d'un des calculateurs de freinage sont actifs pour contrôler la totalité des freins;
- un deuxième mode normal dans lequel les deux modules de l'autre des calculateurs de freinage sont actifs pour contrôler la totalité des freins ;
- un mode alternatif dans lequel un module d'un des calculateurs de freinage et un module de l'autre des calculateurs de freinage sont actifs pour contrôler la totalité des freins.

En effet, il existe des cas de pannes doubles où un module de chacun des calculateurs de freinage est défaillant, chacun des modules défaillants contrôlant une partie des freins complémentaire à celle contrôlée par l'autre module défaillant. Les deux modules restants sont donc théoriquement capables d'assurer un freinage en mobilisant la totalité des freins de l'aéronef.

Selon l'invention, on réalise le freinage à l'aide des deux modules valides, donc à pleine capacité puisqu'il est ainsi possible de contrôler la totalité des freins de l'aéronef. L'architecture de l'invention s'affranchit ainsi du groupement physique de modules pour faire fonctionner simultanément deux modules qui n'appartiennent pas au même calculateur de freinage.

L'architecture de système de freinage de l'invention est ainsi résistante à au moins un certain type de panne double, sans toutefois recourir à un calculateur supplémentaire.

Selon un aspect particulier de l'invention, les modules comprennent des premiers moyens de surveillance configurés pour que, dans chacun des modes de fonctionnement, les deux modules actifs se surveillent mutuellement.

Ainsi, que les modules actifs appartiennent au même calculateur ou à deux calculateurs différents, ils se surveillent mutuellement, permettant d'assurer le freinage avec la totalité des freins avec une grande sécurité, quelque soit le mode de fonctionnement de l'architecture.

De préférence alors, chaque module comporte une première carte adaptée à générer une consigne de freinage, et une deuxième carte adaptée à générer un ordre de freinage pour chaque frein associé au module par modulation de la consigne de freinage en vue d'éviter un glissement dudit frein, les premiers moyens de surveillance étant associés à la première carte des modules et étant adaptés à surveiller la première carte de l'autre des modules actifs.

De préférence encore, la première carte et la deuxième carte d'un même module comportent des deuxièmes moyens de surveillance configurés pour que, lorsque le dit module est actif, la première carte et la deuxième carte se surveillent mutuellement.

A cet effet, la première carte et la deuxième carte comportent de préférence au moins une entrée identique.

Selon un autre aspect particulier de l'invention, l'architecture de système de freinage est configurée pour fonctionner en outre dans un mode de secours dans lequel un seul des modules de l'un des calculateurs de freinage est actif.

Cette disposition permet encore un freinage, avec les seuls freins associés au module actif.

Selon un configuration préférée de l'architecture de l'invention, l'un des modules de l'un des calculateurs est relié à un premier bus d'alimentation, l'un des modules de l'autre des calculateurs est relié à un deuxième bus d'alimentation, les deux autres modules destinés à être actifs ensembles dans le mode alternatif étant reliés à un troisième bus d'alimentation.

Selon un aspect pratique de l'invention, chaque module est configuré pour remplir au moins une autre fonction que le freinage intéressant un au moins des atterrisseurs de l'aéronef, comme par exemple l'orientation de l'aéronef au sol ou encore la descente /relevage desdits atterrisseurs.

L'invention est également relative à un procédé de gestion associé.

### BREVE DESCRIPTION DES DESSINS

L'invention sera mieux comprise à la lumière de la description qui suit en référence aux figures des dessins annexés, dont :
- la figure 1 qui représente de façon schématique une architecture de freinage d'un aéronef selon l'invention ;
- les figures 2 à 5 qui représentent les différents modes de fonctionnement d'une architecture de freinage selon un mode particulier de réalisation de l'invention.

### DESCRIPTION DETAILLEE DE L'INVENTION

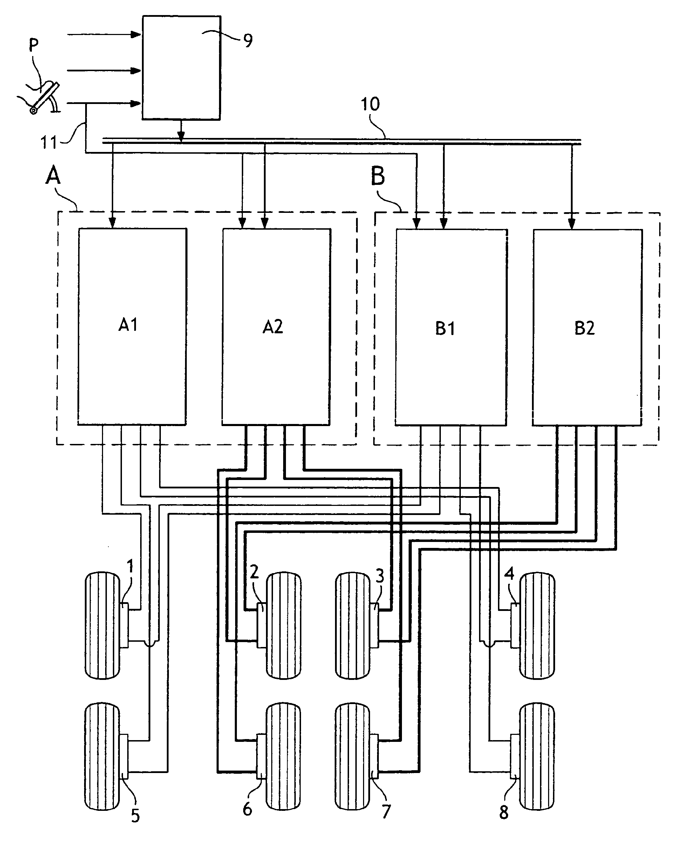

En référence à la figure 1, une architecture de système de freinage pour aéronef comporte deux calculateurs de freinage A,B, comportant chacun des modules, respectivement A1,A2 et B1,B2. Dans l'application illustrée ici, l'aéronef comporte deux atterrisseurs principaux portant chacun quatre roues freinées dont les freins sont référencés de 1 à 8. Les modules A1 et B1 contrôlent respectivement les freins de roues 1,5 du premier atterrisseur et les freins de roues 4,8 du deuxième atterrisseur, tandis que les modules A2 et B2 contrôlent respectivement les freins de roues 2,6 du premier atterrisseur et les freins de roues 3,7 du deuxième atterrisseur, comme cela est illustré schématiquement sur la figure.

Dans la réalité, les modules A1,A2,B1,B2 ne contrôlent pas directement les freins. Si les freins sont de technologie hydraulique, les modules envoient des signaux électriques à des servovalves (une par frein) qui régulent la pression dans les freins en fonction du signal électrique reçu. Si les freins sont de technologie électrique, les modules envoient des signaux électriques à des boîtiers de contrôle (un par frein) qui régulent l'intensité du courant qui alimente les moteurs électriques des freins en fonction du signal électrique reçu. Dans les deux cas, les signaux électriques délivrés par les modules peuvent être identiques, de sorte que l'architecture illustrée peut être utilisée indifféremment sur des aéronefs équipés de freins hydrauliques ou de freins électriques.

On remarquera que la répartition des freins contrôlés par chaque module d'un même calculateur de freinage est symétrique, de sorte que la défaillance subite d'un module n'entraîne pas de déviation de la trajectoire de l'aéronef en roulage sur piste.

En mode normal de fonctionnement, l'un des calculateurs de freinage A,B est actif et contrôle ainsi l'ensemble des freins. Le choix de celui des calculateurs de freinage qui est actif peut se faire de plusieurs façons, connues en soi. On peut par exemple utiliser en permanence l'un des calculateurs de freinage, l'autre n'étant utilisé uniquement qu'en cas de défaillance de celui qui est utilisé habituellement. On peut également choisir d'utiliser alternativement l'un ou l'autre des calculateurs de freinage, en changeant de calculateur de freinage à chaque vol.

L'ensemble des modules A1,A2,B1,B2 reçoit, via un ou plusieurs bus de communication 10, des informations électriques en provenance du cockpit de l'aéronef, qui sont regroupées par un ou plusieurs concentrateurs 9. Parmi ces informations électriques, on trouve notamment un signal provenant d'un sélecteur de freinage par lequel le pilote indique s'il désire un freinage normal contrôlé par le pilote, un freinage automatique à décélération programmée, ou encore une immobilisation de l'aéronef au parking. On trouve également des signaux électriques 11 provenant des pédales P manoeuvrées par le pilote.

Supposons que le calculateur de freinage A est actif. Si le module A1 vient à défaillir, alors l'architecture est configurée de façon connue en soi pour passer le relais au calculateur de freinage B. Celui-ci est à même de contrôler l'ensemble des freins, en assurant ainsi une pleine capacité de freinage. Le freinage continue alors à être assuré selon un mode normal de freinage.

Si, dans un premier scénario, le module B1 vient à défaillir, alors le module B2 continue à contrôler la moitié des freins (en l'occurrence les freins 2,3,6,7). Il est donc encore possible d'assurer un freinage, même après une double panne, même si ce freinage n'est assuré qu'avec la moitié des freins. On se trouve là dans un mode secours de freinage.

Si, dans un deuxième scénario, le module B2 vient à défaillir, alors l'architecture est configurée pour, selon l'invention, assurer le contrôle de l'ensemble des freins au moyen des modules A2 et B1. En effet, le module A2 contrôlant les freins 2,3,6,7 et le module B1 contrôlant les freins 1,4,5,8, il est possible de contrôler l'ensemble des freins à l'aide de ces deux modules, bien que, physiquement, lesdits modules se trouvent dans deux calculateurs différents. Ainsi, ce nouveau mode de fonctionnement est un mode alternatif intermédiaire entre le mode normal et le mode secours, permettant un contrôle de tous les freins, bien qu'aucun des calculateurs ne soit entièrement actif.

Pour ajouter un niveau de sécurité supplémentaire, les modules A2 et B1 reçoivent directement les signaux de pédales 11, ce qui permet, en cas de défaillance du bus de communication 10, de continuer à assurer le freinage de l'aéronef en fonction des indications du pilote, données via les pédales.

Si, dans la suite du deuxième scénario, le module B1 venait à défaillir également, alors il reste possible de réaliser au moyen du module A2 avec une moitié des freins. On retrouve un mode secours de fonctionnement.

Si, alternativement, le module A2 venait à défaillir, alors le module B1 reste actif, de sorte qu'un freinage peut être réalisé avec une moitié des freins.

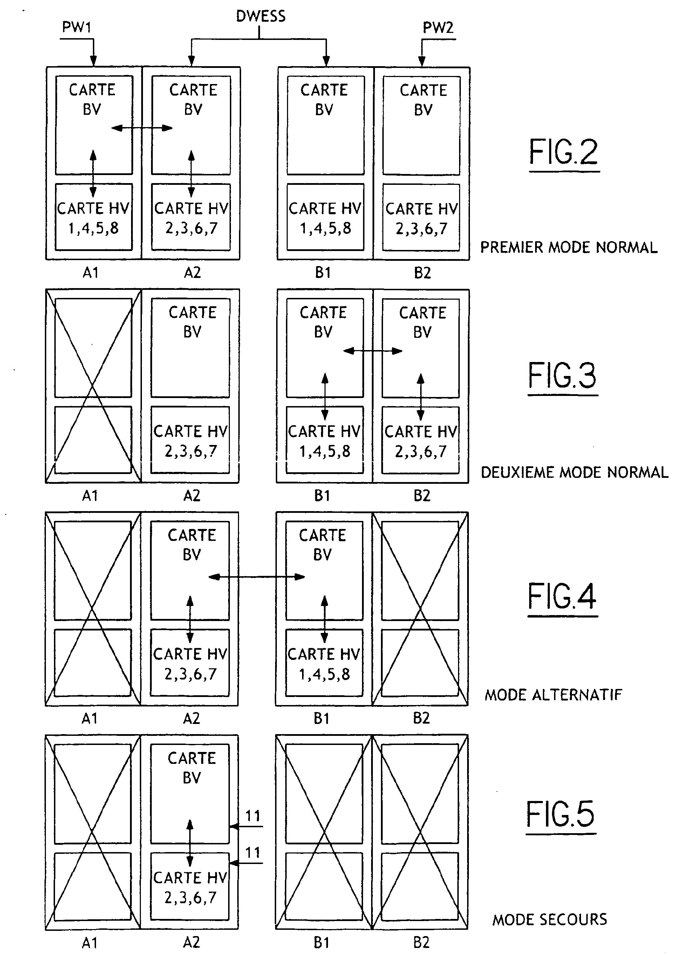

Le principe général de l'invention ayant été expliqué, un mode préféré de réalisation de l'invention va maintenant être décrit en relation avec les figures 2 à 5.

Comme cela est visible à la figure 2, l'architecture comprend, comme expliqué, deux calculateurs A et B séparés chacun en deux modules, respectivement A1,A2 et B1,B2. Ici, seul le calculateur A est actif pour contrôler l'ensemble des freins.

Chacun des modules comporte ici une première carte électronique, appelée ici carte basse vitesse BV, adaptée à générer une consigne de freinage. A cet effet, la carte BV comporte un certain nombre d'entrées telles que le signal de pédales 11 de la figure 1, ou encore un signal de freinage automatique (autobrake).

Chacun des modules comporte par ailleurs une deuxième carte électronique, appelée carte haute vitesse HV, adaptée à générer des ordres de commande en direction des actionneurs (servovalves pour des freins hydrauliques, ou moteurs électriques pour des frein électriques) associés aux freins commandés par ledit module. A cet effet, la carte HV module la consigne de freinage générée par la carte basse vitesse BV correspondante afin d'éviter un glissement des roues lors du freinage (ce, bien sûr, uniquement pour les roues freinées contrôlées par le module). A cet effet, la carte HV comporte un certain nombre d'entrées provenant de divers capteurs (rotation des roues, pression dans les circuits) associés aux roues freinées et aux freins, permettant d'établir cette modulation.

Le processeur de la carte HV est un processeur adapté à fonctionner à une vitesse plus rapide que le processeur de la carte BV, puisque la modulation de la consigne de freinage doit être élaborée en temps réel en fonction d'informations instantanées de comportement des roues et des freins. Cette différence de vitesse des processeurs de la carte BV et la carte HV est à l'origine de l'appellation de ces cartes.

Le module A1 est alimenté par un premier bus d'alimentation PW1 associé à des générateurs entraînés par les moteurs de l'aéronef. Le module B2 est alimenté par un deuxième bus d'alimentation PW2, indépendant du premier bus d'alimentation PW1, et associé à d'autres générateurs entraînés par les moteurs de l'aéronef. Les modules A2 et B1 sont alimentés par un troisième bus d'alimentation PWEss, indépendant des bus d'alimentation PW1 et PW2, et associés d'une part à un générateur auxiliaire non entraîné par les moteurs de l'aéronef, et d'autre part à une source de courant continu, comme des batteries. Il est à noter qu'une panne simple de l'une des sources de courant du bus d'alimentation PWEss ne peut conduire à la perte du bus d'alimentation PWEss.

Ainsi une panne simple affectant les bus de puissance (perte du bus PW1, perte du bus PW2, ou perte de l'une des sources de courant du bus PWEss) ne conduit à la perte que d'au plus l'un des quatre modules.

Pour des raisons de clarté, les alimentations illustrées à la figure 2 ne sont pas reproduites sur les figures suivantes.

En vue d'améliorer la sécurité du freinage, des surveillances sont organisées entres les cartes des modules d'un même calculateur de la façon suivante :
- les cartes BV des modules A1 et A2 sont adaptées à se surveiller mutuellement, par exemple en mettant en oeuvre sur le processeur de l'une des cartes BV des routines de vérification du bon fonctionnement de l'autre des cartes BV, et réciproquement, ainsi qu'en comparant (de façon logicielle, ou au moyen de portes logiques) régulièrement la consigne de freinage générée par l'une des cartes BV à la consigne de freinage générée par l'autre des cartes BV. Cette surveillance est symbolisée par une flèche entre les cartes BV des modules A1 et A2 ;
- dans chaque module, les cartes HV et BV se surveillent mutuellement, en faisant en sorte que le processeur de l'une des cartes vérifie le bon fonctionnement du processeur de l'autre carte. Cette surveillance est symbolisée par une flèche entre la carte BV et la carte HV dans chaque module.

Supposons alors que le module A1 vienne à défaillir, soit parce que le bus d'alimentation PW1 est défaillant, ou soit parce que l'une des cartes du module A1 détecte une défaillance de l'autre carte.

Alors, comme expliqué précédemment, le calculateur A est désactivé, et le relais est transmis au deuxième calculateur B, comme cela est illustré à la figure 3, où le module défaillant A1 a été barré.

Le calculateur B a la même structure que le calculateur A et fonctionne de la même façon que celui-ci. Les flèches symbolisent les surveillances exercées entre d'une parte les cartes BV des modules B1 et B2, et d'autre part entre la carte BV et la carte HV de chacun des modules B1 et B2.

Supposons maintenant que le module B2 vient à défaillir, soit parce que le bus d'alimentation PW2 est défaillant, ou encore parce qu'une divergence entre les cartes BV et HV est détectée.

Alors l'architecture est organisée pour fonctionner au moyen du module A2 du calculateur A et du module B1 du calculateur B, comme cela est illustré à la figure 4 où le module défaillant B2 a été barré. Dans chacun des modules A2 et B1, les cartes HV et BV se surveillent mutuellement. Selon l'invention, les cartes BV des modules A2 et B1 sont également adaptées à se surveiller mutuellement, bien que ces modulés ne fassent pas partie du même calculateur.

Enfin, en cas de panne du module B1, seul le module A2 reste actif pour contrôler seulement une moitié des freins, comme cela est illustré à la figure 5 où le module défaillant B1 a été barré.

A cet égard, et pour assurer un niveau de surveillance entre la carte BV et la carte HV qui dépasse le simple contrôle du bon fonctionnement des processeurs, au moins l'une des entrées dé la carte BV qui lui sont nécessaires pour calculer la consigne de freinage est dupliquée au niveau de la carte HV. Par exemple ici on a illustré de manière symbolique le signal électrique 11 venant des pédales P qui forme l'une des entrées de la carte BV, mais également une entrée de la carte HV, afin que la carte HV puisse elle-même procéder sur la base de ce signal à la vérification des calculs effectués par la carte BV. Cette disposition permet d'augmenter la sécurité du freinage dans ce mode dégradé de fonctionnement où l'un seul des modules est actif. De préférence, cette duplication est opérée sur chacun des modules.

L'architecture de l'invention permet donc, dans le cas d'une simple panne (passage d'un fonctionnement en mode normal du calculateur A à un fonctionnement en mode normal du calculateur B), ou d'une double panne (passage au mode alternatif A2/B1), de continuer à assurer un freinage avec la totalité des freins tout en assurant un haut niveau de sécurité.

Par comparaison avec une architecture de type classique dans laquelle chaque calculateur comporte un premier canal commandant l'ensemble des roues freinées et un deuxième canal surveillant le premier canal, il faudrait, pour obtenir le même niveau de sécurité, mettre en oeuvre trois calculateurs, ce qui se révèle pénalisant tant en masse qu'en coût, maintenance et complexité de fonctionnement.

En cas de triple panne (passage au mode secours A2 seul), l'architecture de l'invention permet encore d'assurer un freinage en mode secours, avec un seul module, sur la moitié des roues.

Il reste encore un mode d'ultime secours consistant à freiner l'aéronef au moyen du frein de parc.

Selon un aspect particulier de l'invention, les cartes BV des modules sont configurées pour remplir d'autres fonctions que le freinage proprement dit, telles que la descente des atterrisseurs, ou l'orientation de l'aéronef au sol. Ces fonctions sont en général considérées comme moins critiques que la fonction de freinage. Il sera alors acceptable de ne pas organiser de surveillance entre les modules A2 et B1 (lors du fonctionnement illustré à la figure 4) pour ces fonctions. Dès lors que cette surveillance n'est pas organisée, ces fonctions seront de préférence assurées selon d'autres moyens, afin de garantir une sécurité de fonctionnement suffisante. Par exemple, la descente des atterrisseurs pourra être assurée par simple gravité, tandis que l'orientation de l'aéronef au sol pourra être assurée par freinage différentiel.

L'invention n'est pas limitée au mode de réalisation particulier qui vient d'être décrit, mais, bien au contraire, couvre toute variante entrant dans le cadre de l'invention tel que défini par les revendications.

En particulier, bien qu'il ait été ici choisi de privilégier le fonctionnement commun des modules A2 et B1, il est possible, de façon symétrique, de prévoir un fonctionnement commun des modules A1 et B2. De la même façon, il est possible de prévoir des fonctionnements en mode secours avec les modules A2 ou B1.

Enfin, bien que l'on ait illustré l'application de l'architecture de freinage de l'invention à un aéronef équipé de deux atterrisseurs principaux à quatre roues freinées, on peut bien sûr appliquer cette architecture à d'autres configurations, comme par exemple un aéronef équipé de deux atterrisseurs principaux de voilure et d'un ou deux atterrisseurs principaux de fuselage. On peut alors envisager divers schémas de contrôle des freins par les modules. Par exemple, on peut envisager que les modules A1 et B1 contrôlent les freins des atterrisseurs de voilure, tandis que les modules A2 et B2 contrôlent les freins des atterrisseurs de fuselage.

## Revendications

1. Architecture de système de freinage pour aéronef équipé d'une pluralité d'atterrisseurs portant une pluralité de roues dont certaines au moins sont équipées de freins (1,2...8), l'architecture comportant au moins deux calculateurs de freinage (A,B) qui comprennent chacun deux modules (A1,A2 ; B1,B2) de sorte que, dans chaque calculateur, l'un des modules (A1,B1) contrôle une première partie des freins (1,4,5,8) et l'autre des modules (A2,B2) contrôle une seconde partie des freins (2,3,6,7) complémentaire, à la première, l'architecture étant configurée pour fonctionner dans l'un des modes de fonctionnement suivants :
- un premier mode normal dans lequel les deux modules (A1,A2) d'un des calculateurs de freinage sont actifs pour contrôler la totalité des freins;
- un deuxième mode normal dans lequel les deux modules (B1,B2) de l'autre des calculateurs de freinage sont actifs pour contrôler la totalité des freins ;
- un mode alternatif dans lequel un module (A2) d'un des calculateurs de freinage et un module (B1) de l'autre des calculateurs de freinage sont actifs pour contrôler la totalité des freins.

2. Architecture de système de freinage selon la revendication 1, **caractérisée en ce que** les modules (A1,A2 ; B1,B2) comprennent des premiers moyens de surveillance configurés pour que, dans chacun des modes de fonctionnement, les deux modules actifs se surveillent mutuellement.

3. Architecture de système de freinage selon la revendication 2, **caractérisée en ce que** chaque module comporte une première carte (BV) adaptée à générer une consigne de freinage, et une deuxième carte (HV) adaptée à générer un ordre de freinage pour chaque frein associé au module par modulation de la consigne de freinage en vue d'éviter un glissement dudit frein, les premiers moyens de surveillance étant associés à la première carte (BV) des modules et étant adaptés à surveiller la priemière carte (BV) de l'autre des modules actifs.

4. Architecture de système de freinage selon la revendication 3, **caractérisé en ce que** la première carte (BV) et la deuxième carte (HV) d'un même module comportent des deuxièmes moyens de surveillance configurés pour que, lorsque le dit module est actif, la première carte (BV) et la deuxième carte (HV) se surveillent mutuellement.

5. Architecture de système de freinage selon la revendication 4, **caractérisée en ce que** la première carte (BV) et la deuxième carte (HV) comportent au moins une entrée (P) identique.

6. Architecture de système de freinage selon la revendication 1, **caractérisée en ce qu'**elle est configurée pour fonctionner en outre dans un mode de secours dans lequel un seul des modules de l'un des calculateurs de freinage est actif.

7. Architecture de système de freinage selon la revendication 1, **caractérisé en ce que** l'un des modules de l'un des calculateurs est relié à un premier bus d'alimentation (PW1), l'un des modules de l'autre des calculateurs est relié à un deuxième bus d'alimentation (PW2), les deux autres modules destinés à être actifs ensembles dans le mode alternatif étant reliés à un troisième bus d'alimentation (PWEss).

8. Architecture de système de freinage selon la revendication 1, **caractérisé en ce que** chaque module est configuré pour remplir au moins une autre fonction que le freinage intéressant un au moins des atterrisseurs de l'aéronef, telle que l'orientation de l'aéronef ou la descente/relevage des atterrisseurs.

9. Procédé de gestion d'une architecture de système de freinage pour aéronef équipé d'une pluralité de freins (1,2...8), l'architecture comportant au moins deux calculateurs de freinage (A,B), qui comprennent chacun deux modules (A1,A2 ; B1,B2) de sorte que, dans chaque calculateur, l'un des modules (A1, B1) contrôle une première partie des freins (1,4,5,8) et l'autre des modules (A2,B2) contrôle une seconde partie des freins (2,3,6,7) complémentaire à la première, le procédé comportant l'étape de faire fonctionner simultanément deux modules (A2,B1 ou B2,A1) appartenant chacun à l'un des calculateurs de freinage pour commander la totalité de la pluralité des freins.

10. Procédé selon la revendication 9, **caractérisé en ce que** les deux modules fonctionnant simultanément se surveillent mutuellement lors de leur fonctionnement simultané.

## Claims

1. An architecture for a braking system for an airplane fitted with a plurality of undercarriages each carrying a plurality of wheels, at least some of which are fitted with brakes (1, 2, ..., 8), the architecture comprising at least two braking computers (A, B) each having two modules (A1, B1) such that in each computer, one of the modules (A1, B1) controls a first fraction of the brakes (1, 4, 5, 8) and the other module (A2, B2) controls a second fraction of the brakes (2, 3, 6, 7) complementary to the first, the architecture being **characterized in that** it is configured to operate in any one of the following modes of operation:
· a first normal mode in which both modules (A1, A2) of one of the braking computers are active for controlling all of the brakes;
· a second normal mode in which both modules (B1, B2) of the other braking computer are active for controlling all of the brakes; and
· an alternative mode in which one module (A2) of one of the braking computers and one module (B1) of the other braking computer are active for controlling all of the brakes.

2. A braking system architecture according to claim 1, **characterized in that** the modules (A1, A2; B1, B2) include first monitoring means configured so that in each mode of operation the two active modules monitor each other.

3. A braking system architecture according to claim 2, **characterized in that** each module comprises a first card (BV) adapted to generate a braking reference signal, and a second card (HV) adapted to generate a braking order for each brake associated with the module by modulating the braking reference signal in order to avoid skidding of said brake, the first monitoring means being associated with the first card (BV) of each module and being adapted to monitor the first card (BV) of the other active module.

4. A braking system architecture according to claim 3, **characterized in that** the first card (BV) and the second card (HV) in a given module include second monitoring means configured, when said module is active, to enable the first and second cards (BV, HV) to monitor each other.

5. A braking system architecture according to claim 4, **characterized in that** the first card (BV) and the second card (HV) include at least one identical input (P).

6. A braking system architecture according to claim 1, **characterized in that** it is configured also to operate in a degraded mode in which only one of the modules of one of the braking computers is active.

7. A braking system architecture according to claim 1, **characterized in that** one of the modules of one of the computers is connected to a first power supply bus (PW1), one of the modules of the other computer is connected to a second power supply bus (PW2), and the other two modules that are intended to be active together in the alternative mode are connected to a third power supply bus (PWEss).

8. A braking system architecture according to claim 1, **characterized in that** each module is configured to perform at least one function other than braking and involving at least one of the undercarriages of the airplane, such as steering the airplane or lowering and/or raising the undercarriages.

9. A method of managing a braking system architecture for an airplane fitted with a plurality of brakes (1, 2, ..., 8), the architecture comprising at least two braking computers (A, B) each comprising two modules (A1, A2; B1, B2) such that in each computer, one of the modules (A1, B1) controls a first fraction of the brakes (1, 4, 5, 8), and the other module (A2, B2) controls a second fraction of the brakes (2, 3, 6, 7) complementary to the first, the method being **characterized in that** it includes the step of causing two modules (A2 & B1 or B2 & A1) each belonging to a different one of the braking computers to operate simultaneously for controlling all of the plurality of brakes.

10. A method according to claim 9, **characterized in that** the two modules operating simultaneously monitor each other while they are operating simultaneously.

## Patentansprüche

1. Bremssystemarchitektur für ein Flugzeug, versehen mit mehreren Fahrwerken, die mehrere Räder tragen, von denen mindestens einige mit Bremsen (1, 2, ...8) ausgestattet sind, wobei die Architektur mindestens zwei Bremsrechner (A, B) umfasst, die jeweils zwei Module (A1, A2; B1, B2) derart enthalten, dass in jedem Rechner eines der Module (A1, B1) einen ersten Teil der Bremsen (1, 4, 5, 8) und das andere Modul (A2, B2) einen zweiten Teil der Bremsen (2, 3, 6, 7), ergänzend zu dem ersten Teil, steuert, wobei die Architektur so konfiguriert ist, dass sie in einem der folgenden Betriebsmodi arbeitet:
- einem ersten Normalmodus, in dem die zwei Module (A1, A2) von einem der Bremsrechner aktiv sind, um die Gesamtheit der Bremsen zu steuern,
- einem zweiten Normalmodus, in dem die zwei Module (B1, B2) des anderen Bremsrechners aktiv sind, um die Gesamtheit der Bremsen steuern,
- einem Alternativmodus, in dem ein Modul (A2) von einem der Bremsrechner und ein Modul (B1) des anderen Bremsrechners aktiv sind, um die Gesamtheit der Bremsen zu steuern.

2. Bremssystemarchitektur nach Anspruch 1, **dadurch gekennzeichnet, dass** die Module (A1, A2; B1, B2) erste Überwachungsmittel umfassen, die so konfiguriert sind, dass sich die zwei aktiven Module in jedem Betriebsmodus gegenseitig überwachen.

3. Bremssystemarchitektur nach Anspruch 2, **dadurch gekennzeichnet, dass** jedes Modul eine erste Karte (BV) umfasst, die geeignet ist, einen Bremswert zu erzeugen, sowie eine zweite Karte (HV), die geeignet ist, für jede mit dem Modul verbundene Bremse durch Modulation des Bremswertes einen Bremsbefehl zu erzeugen, um ein Durchrutschen der besagten Bremse zu verhindern, wobei die ersten Überwachungsmittel mit der ersten Karte (BV) der Module verbunden und geeignet sind, die erste Karte (BV) des anderen aktiven Moduls zu überwachen.

4. Bremssystemarchitektur nach Anspruch 3, **dadurch gekennzeichnet, dass** die erste Karte (BV) und die zweite Karte (HV) eines selben Moduls zweite Überwachungsmittel umfassen, die so konfiguriert sind, dass sich die erste Karte (BV) und die zweite Karte (HV) gegenseitig überwachen, wenn das besagte Modul aktiv ist.

5. Bremssystemarchitektur nach Anspruch 4, **dadurch gekennzeichnet, dass** die erste Karte (BV) und die zweite Karte (HV) mindestens einen identischen Eingang (P) umfassen.

6. Bremssystemarchitektur nach Anspruch 1, **dadurch gekennzeichnet, dass** sie konfiguriert ist, um außerdem in einem Notmodus zu arbeiten, in dem ein einziges Modul von einem der Bremsrechner aktiv ist.

7. Bremssystemarchitektur nach Anspruch 1, **dadurch gekennzeichnet, dass** eines der Module von einem der Rechner an einen ersten Versorgungsbus (PW1) und ein Modul des anderen Rechners an einen zweiten Versorgungsbus (PW2) angeschlossen ist, wobei die zwei anderen Module, die dazu bestimmt sind, im Alternativmodus gemeinsam aktiv zu sein, an einen dritten Versorgungsbus (PWEss) angeschlossen sind.

8. Bremssystemarchitektur nach Anspruch 1, **dadurch gekennzeichnet, dass** jedes Modul so konfiguriert ist, dass es für mindestens eines der Fahrwerke mindestens eine andere Funktion als das Bremsen erfüllt, wie z. B. das Lenken des Flugzeuges oder das Ausfahren/ Einfahren der Fahrwerke.

9. Verfahren zur Steuerung einer Bremssystemarchitektur für ein Flugzeug, das mit mehreren Bremsen (1, 2, ...8) ausgestattet ist, wobei die Architektur mindestens zwei Bremsrechner (A, B) umfasst, die jeweils zwei Module (A1, A2; B1, B2) derart enthalten, dass in jedem Rechner eines der Module (A1, B1) einen ersten Teil der Bremsen (1, 4, 5, 8) und das andere Modul (A2, B2) einen zweiten Teil der Bremsen (2, 3, 6, 7), ergänzend zu dem ersten Teil, steuert, wobei das Verfahren den Schritt umfasst, gleichzeitig zwei Module (A2, B 1 oder B2, A1) zu betätigen, von denen jeweils eines zu einem der Bremsrechner gehört, um die Gesamtheit der mehreren Bremsen zu steuern.

10. Verfahren nach Anspruch 9, **dadurch gekennzeichnet, dass** sich die zwei gleichzeitig funktionierenden Module während ihres gleichzeitigen Betriebs gegenseitig überwachen.
